# EUROPÄISCHE PATENTSCHRIFT

(11) **EP 2 705 564 B1**
(45) Veröffentlichungstag und Bekanntmachung des Hinweises auf die Patenterteilung: **14.02.2018**
(21) Anmeldenummer: 12716428.3
(22) Anmeldetag: 25.04.2012
(51) Int. Cl.: H01M 10/44, H01M 10/48, B60L 11/18, H02J 7/00

(54) **VERFAHREN ZUR STEUERUNG EINER BATTERIE SOWIE EINE BATTERIE ZUR AUSFÜHRUNG DES VERFAHRENS**
METHOD FOR CONTROLLING A BATTERY, AND A BATTERY FOR CARRYING OUT THE METHOD
PROCÉDÉ DE COMMANDE D'UNE BATTERIE ET BATTERIE POUR LA MISE EN OEUVRE DU PROCÉDÉ

(30) Priorität: 06.05.2011 DE 102011075376
(43) Veröffentlichungstag der Anmeldung: 12.03.2014
(73) Patentinhaber: ROBERT BOSCH GMBH, 70442 Stuttgart (DE); SAMSUNG SDI CO., LTD., Yongin-si, Gyeonggi-do 446-577 (KR)
(72) Erfinder: SCHMIDT, Ralph, 71384 Weinstadt (DE); BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2012/057499
(87) Internationale Veröffentlichungsnummer: WO 2012/152582

(56) Entgegenhaltungen:
- EP-A2- 0 769 837
- WO-A2-2004/049540
- DE-A1-102009 027 833
- US-A- 5 642 275
- US-A1- 2008 116 850

## Beschreibung

Die vorliegende Erfindung betrifft ein Verfahren zur Steuerung einer Batterie mit mindestens einem Batteriemodulstrang, bei dem ein Batteriemodul im Batteriemodulstrang eine Koppeleinheit umfasst. Insbesondere betrifft die Erfindung ein Verfahren zur Steuerung einer Batterie, bei der Gruppen von Batteriemodulen redundant dieselbe Ausgangsspannung liefern können und die Auswahl von Batteriemodulen an der Stromführung in Abhängigkeit von Batteriekenngrößen erfolgt.

### Stand der Technik

Es zeichnet sich ab, dass in Zukunft sowohl bei stationären Anwendungen, als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbarer Leistung erfüllen zu können, wird eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen. Dabei ist jedoch problematisch, dass es aufgrund nicht exakt identischer Zellkapazitäten und -spannungen zu Ausgleichsströmen zwischen den parallel geschalteten Batteriezellen kommen kann.

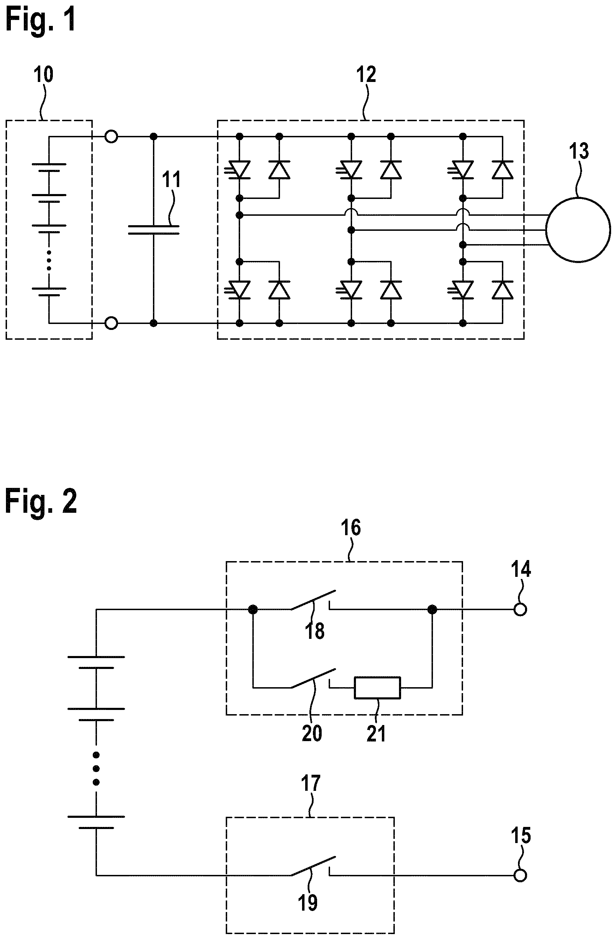

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Figur 1 dargestellt. Eine Batterie 10 ist an einen Gleichspannungszwischenkreis angeschlossen, welcher durch einen Kondensator 11 gepuffert wird. An den Gleichspannungszwischenkreis angeschlossen ist ein Pulswechselrichter 12, der über jeweils zwei schaltbare Halbleiterventile und zwei Dioden an drei Ausgängen gegeneinander phasenversetzte sinusförmige Ströme für den Betrieb eines elektrischen Antriebsmotors 13 bereitstellt. Die Kapazität des Kondensators 11 muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich von mF. Wegen der üblicherweise recht hohen Spannung des Gleichspannungszwischenkreises kann eine so große Kapazität nur unter hohen Kosten und mit hohem Raumbedarf realisiert werden.

Figur 2 zeigt die Batterie 10 der Figur 1 in einem detaillierteren Blockschaltbild. Eine Vielzahl von Batteriezellen sind in Serie sowie optional zusätzlich parallel geschaltet, um eine für eine jeweilige Anwendung gewünschte hohe Ausgangsspannung und Batteriekapazität zu erreichen. Zwischen den Pluspol der Batteriezellen und ein positives Batterieterminal 14 ist eine Lade- und Trenneinrichtung 16 geschaltet. Optional kann zusätzlich zwischen den Minuspol der Batteriezellen und ein negatives Batterieterminal 15 eine Trenneinrichtung 17 geschaltet werden. Die Trenn- und Ladeeinrichtung 16 und die Trenneinrichtung 17 umfassen jeweils ein Schütz 18 bzw. 19, welche dafür vorgesehen sind, die Batteriezellen von den Batterieterminals abzutrennen, um die Batterieterminals spannungsfrei zu schalten. Aufgrund der hohen Gleichspannung der seriengeschalteten Batteriezellen ist andernfalls erhebliches Gefährdungspotential für Wartungspersonal oder dergleichen gegeben. In der Lade- und Trenneinrichtung 16 ist zusätzlich ein Ladeschütz 20 mit einem zu dem Ladeschütz 20 in Serie geschalteten Ladewiderstand 21 vorgesehen. Der Ladewiderstand 21 begrenzt einen Aufladestrom für den Kondensator 11, wenn die Batterie an den Gleichspannungszwischenkreis angeschlossen wird. Hierzu wird zunächst das Schütz 18 offen gelassen und nur das Ladeschütz 20 geschlossen. Erreicht die Spannung am positiven Batterieterminal 14 die Spannung der Batteriezellen, kann das Schütz 19 geschlossen und gegebenenfalls das Ladeschütz 20 geöffnet werden. Die Schütze 18, 19 und das Ladeschütz 20 erhöhen die Kosten für eine Batterie 10 nicht unerheblich, da hohe Anforderungen an ihre Zuverlässigkeit und an die von ihnen zu führenden Ströme gestellt werden.

Die Druckschrift DE 10 2009 027833 A1 offenbart einen Energieübertrager für ein Batteriesystem, wobei der Energieübertrager einen ersten und einen zweiten primären DC/DC-Umsetzer mit jeweils zwei Eingängen und zwei Ausgängen. Die Eingänge sind für das Anschließen eines Batteriemoduls ausgebildet und der erste und der zweite primäre DC/DC-Umsetzer sind ausgangsseitig in Serie geschaltet. Der Energieübertrager verfügt über wenigstens einen ersten sekundären DC/DC-Umsetzer mit zwei Eingängen, die mit den Ausgängen des zweiten primären DC/DC-Umsetzers verbunden sind, und mit einem mit einem der Ausgänge des ersten primären DC/DC-Umsetzers verbundenen ersten Ausgang. Ein Ladezustandsausgleich zwischen Batteriemodulen des Batteriesystems erfolgt anhand der Ladezustände der Batteriemodule.

Nachteilig an den beschriebenen Batterien des Standes der Technik ist, dass im System enthaltene Batteriezellen oder -module von dem gleichen Strom durchflossen werden und somit nicht einzeln ansteuerbar sind. Es besteht daher keine Möglichkeit, auf verschiedene Zustände von einzelnen Batteriezellen Einfluss zu nehmen.

### Offenbarung der Erfindung

Erfindungsgemäß wird daher ein Verfahren zur Steuerung einer Batterie, umfassend mindestens einen Batteriemodulstrang bestehend aus einer Mehrzahl von miteinander gekoppelten Batteriemodulen, angegeben, wobei ein Batteriemodul eine Koppeleinheit aufweist, die so ausgebildet ist, dass eine positive Batteriemodulspannung und eine Spannung von 0 V von dem Batteriemodul ausgebbar ist. Dadurch wird vorteilhafterweise die Auswahlmöglichkeit zur stufigen Einstellung der Spannung erhöht.

Das Verfahren umfasst dabei zunächst den Schritt des Anforderns einer bereitzustellenden Batterieausgangsspannung oder Batteriestrangausgangsspannung und des Bestimmens einer Anzahl von Batteriemodulen, die zur Bereitstellung der angeforderten Ausgangsspannung benötigt wird. Es folgt eine Auswahl von Batteriemodulen, bis die benötigte Anzahl von Batteriemodulen erreicht ist, in Abhängigkeit mindestens einer der folgenden Batteriekenngrößen: dem Ladezustand, wobei Batteriemodule mit hohem Ladezustand mit einer höheren Wahrscheinlichkeit als Batteriemodule mit niedrigem Ladezustand ausgewählt werden, wenn der Strom aus der Batterie oder dem Batteriestrang einen Wert von größer Null aufweist oder Batteriemodule mit niedrigem Ladezustand mit einer höheren Wahrscheinlichkeit als Batteriemodule mit hohem Ladezustand ausgewählt werden, wenn der Strom aus der Batterie oder dem Batteriestrang einen Wert von kleiner Null aufweist; der Temperatur, wobei Batteriemodule mit einer kleinen Temperatur mit einer höheren Wahrscheinlichkeit als Batteriemodule mit einer großen Temperatur ausgewählt werden, wobei beispielsweise zunächst eine Reihenfolge der Batteriemodule in Abhängigkeit von der Temperatur bestimmt wird und diese dann in aufsteigender Reihenfolge ausgewählt werden was vorteilhafterweise die Temperaturentwicklung in der Batterie positiv beeinflusst; der Alterung, wobei Batteriemodule (50) mit hohem State of-Health (SOH) mit höherer Wahrscheinlichkeit als Batteriemodule (50) mit niedrigerem State-of-Health (SOH) ausgewählt werden, und der Lebensdauer. Abschließend wird die angeforderte Batterieausgangsspannung oder Batteriestrangausgangsspannung bereitgestellt.

Die Koppeleinheit umfasst bevorzugt einen ersten Eingang, einen zweiten Eingang, einen ersten Ausgang und einen zweiten Ausgang sowie einen ersten, einen zweiten, einen dritten und einen vierten Schalter, wobei der erste Schalter zwischen den ersten Eingang und den ersten Ausgang geschaltet ist, der zweite Schalter zwischen den zweiten Eingang und den zweiten Ausgang, der dritte Schalter zwischen den ersten Eingang und den zweiten Ausgang und der vierte Schalter zwischen den zweiten Eingang und den ersten Ausgang geschaltet ist,. Sie ist ausgebildet, in einem ersten Schaltzustand auf ein erstes Steuersignal hin den ersten Eingang mit dem ersten Ausgang über den ersten Schalter und den zweiten Eingang mit dem zweiten Ausgang über den dritten Schalter oder den ersten Eingang mit dem zweiten Ausgang über den dritten Schalter und den zweiten Eingang mit dem ersten Ausgang über den vierten Schalter zu verbinden und in einem zweiten Schaltzustand auf ein zweites Steuersignal hin den ersten Ausgang mit dem zweiten Ausgang zu verbinden. Durch die Koppeleinheiten ist die Ausgangsspannung stufig einstellbar. Dabei sind die Koppeleinheiten in der Lage, entweder die Spannung 0 V oder die positive Modulspannung U_{mod} auszugeben.

Vorteilhafterweise bieten die Batteriesysteme, die eine Spannung von U_{mod} und 0 V ausgeben können, bevorzugt mit genannten Koppeleinheiten, die Möglichkeit, eine gewünschte Ausgangsspannung über mehrere redundante Batteriemodulkombinationen bzw. Schaltkombinationen der in den Systemen beteiligten Koppeleinheiten einzustellen. Mit anderen Worten, es existieren mehrere redundante Kombinationen von Batteriemodulausgangsspannungen, mit denen die angeforderte Batterieausgangsspannung zu erreichen ist. Dabei kann von diesem Freiheitsgrad Gebrauch gemacht werden, um verschiedene Zustände der einzelnen Batteriemodule zu beeinflussen. Somit ist es möglich, Zustände der Batteriemodule wie Ladezustand, Temperatur, Alterung und Lebensdauer gezielt zu beeinflussen. Dies kann sowohl für die gesamte Batterie mit mehreren Batteriesträngen als auch für jeden einzelnen Batteriestrang erfolgen.

Um also eine geforderte Batterie- oder auch Batteriestrangausgangsspannung, welche kleiner als die maximal zur Verfügung stehende Batterie- oder Batteriestrangausgangsspannung ist, bereitzustellen, sind mehrere verschiedene, aber für das Verhalten an den Klemmen nach außen gleichwertige Schaltkombinationen der in den Systemen beteiligten Koppeleinheiten, bevorzugt umfassend Halbleiterschalter, möglich. Es werden nicht mehr alle im System enthaltenen Batteriemodule von dem gleichen Strom durchflossen, so wie es bei der in Figur 1 dargestellten, den heutigen Stand der Technik darstellenden Lösung der Fall ist. Durch diese verschiedenen, gleichwertigen Schaltkombinationen der Koppeleinheiten ergeben sich in den Steuerverfahren verschiedene Möglichkeiten zur Optimierung verschiedener Zustände der Batterie.

Bevorzugt werden im Schritt der Auswahl von Batteriemodulen die benötigten Batteriemodule zeitlich sequentiell ausgewählt. Somit kann ein Batteriemodul nach dem anderen entsprechend der gewählten Kriterien ausgewählt werden.

Der Schritt der Auswahl von Batteriemodulen in Abhängigkeit von dem Ladezustand umfasst dabei bevorzugt folgende Schritte: Bestimmen der zur Erlangung der angeforderten Batterieausgangsspannung benötigten Anzahl an Modulen und, wenn der Strom aus der Batterie oder dem Batteriestrang einen Wert von größer Null aufweist, erfolgt die Auswahl nach absteigendem Ladezustand. Beispielsweise wird zunächst das Batteriemodul mit dem höchsten Ladezustand ausgewählt, dann das Batteriemodul mit dem zweithöchsten Ladezustand usw. Bei einem Strom kleiner Null erfolgt die Auswahl noch bevorzugter nach ansteigendem Ladezustand. Beispielsweise wird dann zunächst das Batteriemodul mit dem niedrigsten Ladezustand ausgewählt, dann das Batteriemodul mit dem zweitniedrigsten Ladezustand usw. Es können aber auch Ladezustandsbereiche vorbestimmt und diesen Ladezustandsbereichen bestimmte Auswahlwahrscheinlichkeiten zugewiesen werden. Insbesondere kann einem hohen Ladezustandsbereich eine höhere Wahrscheinlichkeit zur Auswahl als einem niedrigen Ladezustandsbereich zugewiesen werden, und vice versa. Dann werden die Batterien mit einem hohen Ladezustand häufiger an der Stromführung beteiligt als die mit einem niedrigen Ladezustand und eine Reihenfolge der Batteriemodule nach dem Ladezustand muss nicht bestimmt werden.

Im Schritt der Auswahl von Batteriemodulen werden in Abhängigkeit von der Temperatur können aber auch Temperaturbereiche vorbestimmt werden und diesen Temperaturbereichen bestimmte Auswahlwahrscheinlichkeiten zugewiesen werden. Insbesondere kann einem niedrigen Temperaturbereich eine höhere Wahrscheinlichkeit zur Auswahl als einem hohen Temperaturbereich zugewiesen werden. Dann werden die Batterien mit einer hohen Temperatur seltener an der Stromführung beteiligt und eine Reihenfolge muss nicht immer bestimmt werden.

Im Schritt der Auswahl von Batteriemodulen nach dem Gesundheitszustand oder State-of-Health können bevorzugt Batteriemodule insbesondere in einer Reihenfolge ausgewählt werden, die der Anordnung der Batteriemodule nach absteigendem State-of-Health entspricht. Es können aber auch State-of-Health-Bereiche vorbestimmt und diesen State-of-Health-Bereichen bestimmte Auswahlwahrscheinlichkeiten zugewiesen werden. Insbesondere kann einem hohen State-of-Health-Bereich eine höhere Wahrscheinlichkeit zur Auswahl als einem niedrigen State-of-Health-Bereich zugewiesen werden. Dann werden die Batterien mit einem hohen State-of-Health häufiger an der Stromführung beteiligt als die mit einem niedrigen State-of-Health-Bereich und eine Reihenfolge der Batteriemodule nach dem State-of-Health muss nicht bestimmt werden. Gleichzeitig wird die Alterung der Batteriemodule positiv beeinflusst.

Der Schritt des Bestimmens der Anzahl von Batteriemodulen umfasst bevorzugt den Schritt des Bestimmens von Kombinationen von Schaltzuständen der Koppeleinheiten der Batteriemodule, mit denen die angeforderte Batterieausgangsspannung erreichbar ist. Der Schritt der Auswahl von Batteriemodulen umfasst dann den Schritt der Auswahl einer Kombination aus den zuvor bestimmten Kombinationen von Schaltzuständen der Koppeleinheiten von Batteriemodulen, welcher in Abhängigkeit mindestens einer der besagten Batteriekenngrößen erfolgt. Das Bereitstellen der Ausgangsspannung erfolgt dann nach dem Senden der entsprechenden Steuersignale an die Koppeleinheiten.

Im Schritt der Auswahl der Batteriemodule kann die Anzahl der ausgewählten Batteriemodule so gewählt werden, dass sie minimal ist. Auch hiermit kann die Alterung der Batterie positiv beeinflusst werden.

In einem zweiten Ausführungsbeispiel ist die Koppeleinheit ferner ausgebildet, in einem dritten Schaltzustand auf ein drittes Steuersignal hin den ersten Eingang mit dem zweiten Ausgang und den zweiten Eingang mit dem ersten Ausgang zu verbinden. Dadurch kann zusätzlich zur positiven Modulausgangsspannung +U_{mod} und der Spannung 0 V auch die negative Modulausgangsspannung -U_{mod} nach außen geschaltet werden. Dann umfasst der Schritt der Auswahl der Batteriemodule ferner, wenn in dem mindestens einen Batteriestrang ein Strom größer Null fließt und eine positive Strangausgangsspannung benötigt wird, die Auswahl der Batteriemodule mit hohem Ladezustand mit einer höheren Wahrscheinlichkeit als Batteriemodule mit niedrigem Ladezustand. Wenn in dem mindestens einen Batteriestrang ein Strom kleiner Null fließt und eine positive Strangausgangsspannung benötigt wird, erfolgt die Auswahl der Batteriemodule mit niedrigem Ladezustand mit einer höheren Wahrscheinlichkeit als Batteriemodule mit hohem Ladezustand. Wird in dem mindestens einen Batteriestrang eine negative Strangausgangsspannung benötigt und es fließt ein Strom kleiner Null, erfolgt die Auswahl der Batteriemodule mit hohem Ladezustand mit einer höheren Wahrscheinlichkeit als Batteriemodule mit niedrigem Ladezustand. Wird jedoch in dem mindestens einen Batteriestrang eine negative Strangausgangsspannung benötigt und es fließt ein Strom größer Null, erfolgt die Auswahl der Batteriemodule mit niedrigem Ladezustand mit einer höheren Wahrscheinlichkeit als Batteriemodule mit hohem Ladezustand.

Die Batterie kann eine Mehrzahl von Batteriemodulsträngen umfassen, wobei die Differenz der Batteriemodulstränge zwischen zwei Strängen die angeforderte Batterieausgangsspannung definiert. Die Auswahl der Differenz zwischen den Batteriemodulsträngen kann dann in Abhängigkeit von mindestens einer der besagten Batteriekenngrößen wie oben beschrieben erfolgen. Auch die Differenzen zwischen den Batteriemodulsträngen bilden eine redundante Gruppe. Die Redundanz kann ausgewählt werden, um die Batteriekenngrößen der Batteriemodule gezielt zu beeinflussen.

Erfindungsgemäß wird ferner eine Batterie umfassend mindestens einen Batteriemodulstrang bestehend aus einer Mehrzahl von miteinander gekoppelten Batteriemodulen angegeben. Ein Batteriemodul weist dabei eine Koppeleinheit auf, und die Koppeleinheit umfasst einen ersten Eingang, einen zweiten Eingang, einen ersten Ausgang und einen zweiten Ausgang sowie einen ersten, einen zweiten, einen dritten und einen vierten Schalter, wobei der erste Schalter zwischen den ersten Eingang und den ersten Ausgang geschaltet ist, der zweite Schalter zwischen den zweiten Eingang und den zweiten Ausgang, der dritte Schalter zwischen den ersten Eingang und den zweiten Ausgang und der vierte Schalter zwischen den zweiten Eingang und den ersten Ausgang geschaltet ist. Die Koppeleinheit ist ausgebildet, in einem ersten Schaltzustand auf ein erstes Steuersignal hin den ersten Eingang mit dem ersten Ausgang über den ersten Schalter und den zweiten Eingang mit dem zweiten Ausgang über den dritten Schalter oder den ersten Eingang mit dem zweiten Ausgang über den dritten Schalter und den zweiten Eingang mit dem ersten Ausgang über den vierten Schalter zu verbinden und in einem zweiten Schaltzustand auf ein zweites Steuersignal hin den ersten Ausgang mit dem zweiten Ausgang zu verbinden. Ferner ist die Batterie dazu ausgebildet, das erfindungsgemäße Verfahren auszuführen. Die Koppeleinheit kann ferner ausgebildet sein, in einem dritten Schaltzustand auf ein drittes Steuersignal hin den ersten Eingang mit dem zweiten Ausgang und den zweiten Eingang mit dem ersten Ausgang zu verbinden.

Es wird zudem ein Kraftfahrzeug mit einem elektrischen Antriebsmotor zum Antreiben des Kraftfahrzeuges und einer mit dem elektrischen Antriebsmotor verbundenen erfindungsgemäßen Batterie angegeben.

Die Batterie ist bevorzugt eine Lithium-Ionen-Batteriezelle.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein elektrisches Antriebssystem gemäß dem Stand der Technik,
Figur 2 ein Blockschaltbild einer Batterie gemäß dem Stand der Technik,
Figur 3 eine Koppeleinheit gemäß der Erfindung in einem ersten Ausführungsbeispiel,
Figur 4 eine erste Ausführungsform der Koppeleinheit,
Figur 5 eine zweite Ausführungsform der Koppeleinheit,
Figur 6 eine dritte Ausführungsform der Koppeleinheit,
Figur 7 eine Ausführungsform des erfindungsgemäßen Batteriemoduls, und
Figur 8 ein Antriebssystem mit einer weiteren Ausführungsform der erfindungsgemäßen Batterie.

### Ausführungsformen der Erfindung

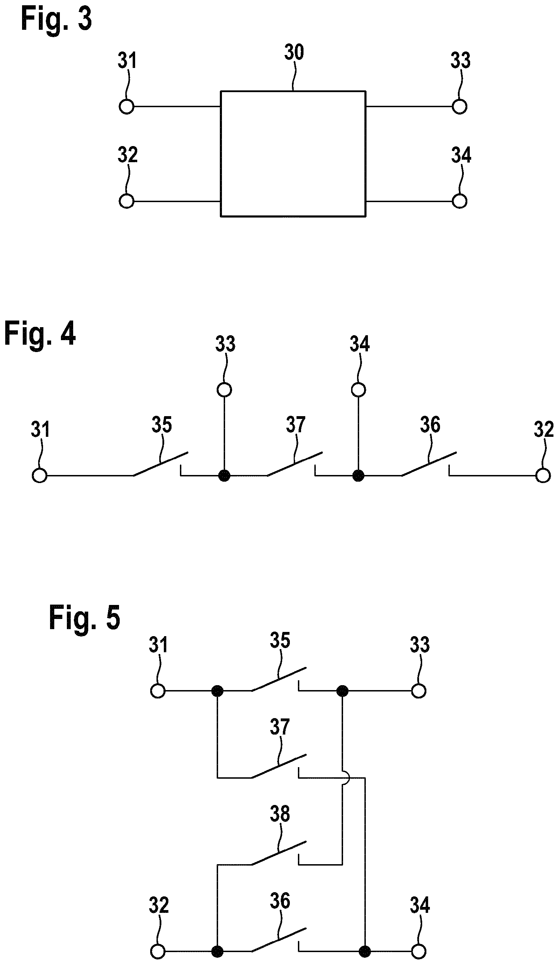

Figur 3 zeigt eine Koppeleinheit 30 gemäß der Erfindung. Die Koppeleinheit 30 besitzt zwei Eingänge 31 und 32 sowie zwei Ausgänge 33 und 34. Sie ist ausgebildet, entweder den ersten Eingang 31 mit dem ersten Ausgang 33 sowie den zweiten Eingang 32 mit dem zweiten Ausgang 34 zu verbinden oder aber den ersten Eingang 31 mit dem zweiten Ausgang 34 und den zweiten Eingang 32 mit dem ersten Ausgang 33 zu verbinden. Bei bestimmten Ausführungsformen der Koppeleinheit kann diese außerdem ausgebildet sein, beide Ausgänge 33, 34 miteinander zu verbinden, um eine Ausgangsspannung von 0 V zu erzeugen. Dadurch kann beispielsweise auch eine näherungsweise sinusförmige Ausgangsspannung der Batterie eingestellt werden.

Figur 4 zeigt eine mögliche schaltungstechnische Umsetzung der Ausführungsform der Koppeleinheit 30 in einem ersten Ausführungsbeispiel, bei der ein erster, ein zweiter und ein dritter Schalter 35, 36 und 37 vorgesehen sind. Der erste Schalter 35 ist zwischen den ersten Eingang 31 und den ersten Ausgang 33 geschaltet, der zweite Schalter 36 ist zwischen den zweiten Eingang 32 und den zweiten Ausgang 34 und der dritte Schalter 37 zwischen den ersten Ausgang 33 und den zweiten Ausgang 34 geschaltet. Diese Ausführungsform bietet den Vorteil, dass die Schalter 35, 36 und 37 einfach als Halbleiterschalter wie z. B. MOSFETs oder IGBTs verwirklicht werden können. Halbleiterschalter haben den Vorteil eines günstigen Preises und einer hohen Schaltgeschwindigkeit, so dass die Koppeleinheit 30 innerhalb einer geringen Zeit auf ein Steuersignal bzw. eine Änderung des Steuersignals reagieren kann und hohe Umschaltraten erreichbar sind.

Die Koppeleinheit 30 ist ausgebildet, entweder den ersten Eingang 31 mit dem ersten Ausgang 33 über den ersten Schalter 35 sowie den zweiten Eingang 32 mit dem zweiten Ausgang 34 über den zweiten Schalter 36 zu verbinden (und den ersten Ausgang 33 vom zweiten Ausgang 34 durch Öffnen des dritten Schalters 37 abzukoppeln) oder aber den ersten Ausgang 33 mit dem zweiten Ausgang 34 durch Schließen des dritten Schalters 37 zu verbinden (und dabei die Eingänge 31 und 32 durch Öffnen der ersten und zweiten Schalter 35 und 36 abzukoppeln). Die Koppeleinheit 30 kann außerdem ausgebildet sein, beide Eingänge 31, 32 von den Ausgängen 33, 34 abzutrennen und auch den ersten Ausgang 33 vom zweiten Ausgang 34 abzukoppeln. Nicht vorgesehen ist jedoch, sowohl den ersten Eingang 31 mit dem zweiten Eingang 32 zu verbinden.

Zur Schaltung werden entsprechende Steuersignale verwendet. Auf ein erstes Steuersignal hin wird ein erster Schaltzustand erreicht, bei dem der erste Eingang 31 mit dem ersten Ausgang 33 über den Schalter 35 sowie der zweite Eingang 32 mit dem zweiten Ausgang 34 über den Schalter 36 verbunden ist. Auf ein zweites Steuersignal hin wird der erste Ausgang 33 mit dem zweiten Ausgang 34 verbunden. Im Folgenden werden die Schaltzustände der Koppeleinheiten immer durch entsprechende Steuersignale erreicht. Die Steuersignale können dabei von einem Batteriemanagementsystem gesendet werden.

Figur 5 zeigt eine zweite Ausführungsform der Koppeleinheit 30, bei der ein erster, ein zweiter, ein dritter und ein vierter Schalter 35, 36, 37 und 38 vorgesehen sind. Der erste Schalter 35 ist zwischen den ersten Eingang 31 und den ersten Ausgang 33 geschaltet, der zweite Schalter 36 ist zwischen den zweiten Eingang 32 und den zweiten Ausgang 34, der dritte Schalter 37 zwischen den ersten Eingang 31 und den zweiten Ausgang 34 und der vierte Schalter 38 zwischen den zweiten Eingang 32 und den ersten Ausgang 33 geschaltet. Diese Ausführungsform bietet den ebenfalls den Vorteil, dass die Schalter 35, 36, 37 und 38 einfach als Halbleiterschalter verwirklicht werden können.

Die Koppeleinheit 30 ist ausgebildet, entweder den ersten Eingang 31 mit dem ersten Ausgang 33 über den Schalter 35 sowie den zweiten Eingang 32 mit dem zweiten Ausgang 34 über den Schalter 36 zu verbinden oder aber den ersten Eingang 31 mit dem zweiten Ausgang 34 über den Schalter 37 und den zweiten Eingang 32 mit dem ersten Ausgang 33 über den Schalter 38 zu verbinden. Ferner können beide Ausgänge 33, 34 miteinander über die Schalter 38 und 36 verbunden werden, um eine Ausgangsspannung von 0 V zu erzeugen.

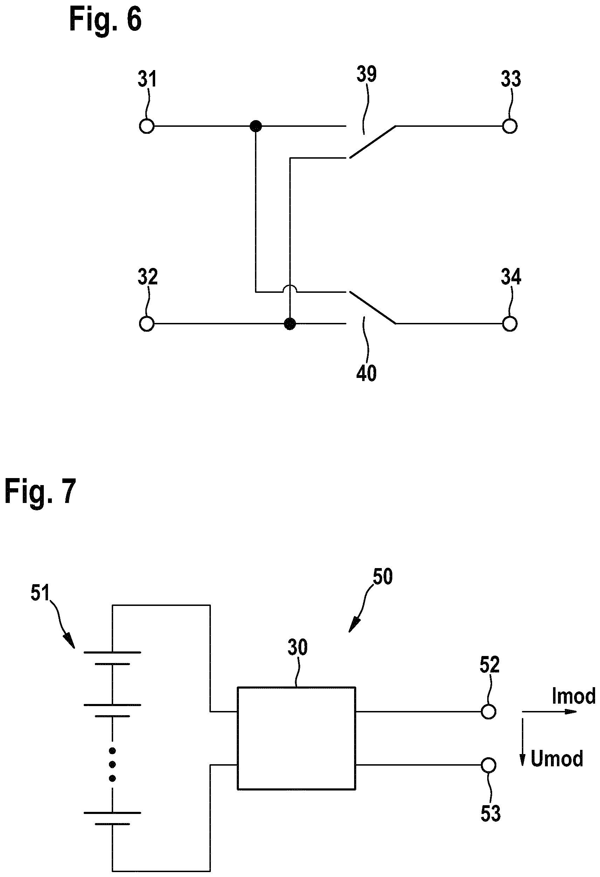

Figur 6 zeigt eine dritte Ausführungsform der Koppeleinheit 30, welche über einen ersten Wechselschalter 39 und einen zweiten Wechselschalter 40 verfügt. Es sind auch Ausführungsformen denkbar, bei denen nur einer der beiden Wechselschalter 39, 40 vorgesehen ist und der andere durch die Schalter 35 und 38 bzw. 37 und 36 ersetzt wird. Die Wechselschalter 39, 40 besitzen die prinzipielle Eigenschaft, nur einen ihrer jeweiligen Eingänge auf ihren Ausgang durchschalten zu können, während der jeweils verbleibende Eingang abgekoppelt wird. Dies bietet den Vorteil, dass auch bei Fehlfunktion der eingesetzten Schalter oder Steuereinheit niemals der erste Eingang 31 der Koppeleinheit 30 mit dem zweiten Eingang 32 der Koppeleinheit 30 verbunden wird und so die angeschlossenen Batteriezellen kurzgeschlossen werden können. Die Wechselschalter 39 und 40 können besonders einfach als elektromechanische Schalter realisiert werden.

Die Figur 7 zeigt eine Ausführungsform des erfindungsgemäßen Batteriemoduls 50. Eine Mehrzahl von Batteriezellen 51 ist zwischen die Eingänge einer Koppeleinheit 30 in Serie geschaltet. Die Erfindung ist jedoch nicht auf eine solche Serienschaltung von Batteriezellen beschränkt, es kann auch nur eine einzelne Batteriezelle vorgesehen sein oder aber eine Parallelschaltung oder gemischt-seriell-parallele Schaltung von Batteriezellen. Der erste Ausgang der Koppeleinheit 30 ist mit einem ersten Terminal 52 und der zweite Ausgang der Koppeleinheit 30 mit einem zweiten Terminal 53 verbunden. Wie bereits erklärt, bietet das Batteriemodul 50 nach dem zweiten Ausführungsbeispiel den Vorteil, dass die Batteriezellen 51 durch die Koppeleinheit 30 in einer wählbaren Polarität mit den Terminals 52, 53 verbunden werden können, so dass eine Ausgangsspannung unterschiedlicher Vorzeichen erzeugt werden kann. Auch kann es möglich sein, beispielsweise durch Schließen der Schalter 36 und 38 und gleichzeitiges Öffnen der Schalter 35 und 37 (oder aber durch Öffnen der Schalter 36 und 38 sowie Schließen der Schalter 35 und 37), die Terminals 52 und 53 miteinander leitend zu verbinden und eine Ausgangsspannung von 0 V zu erzeugen.

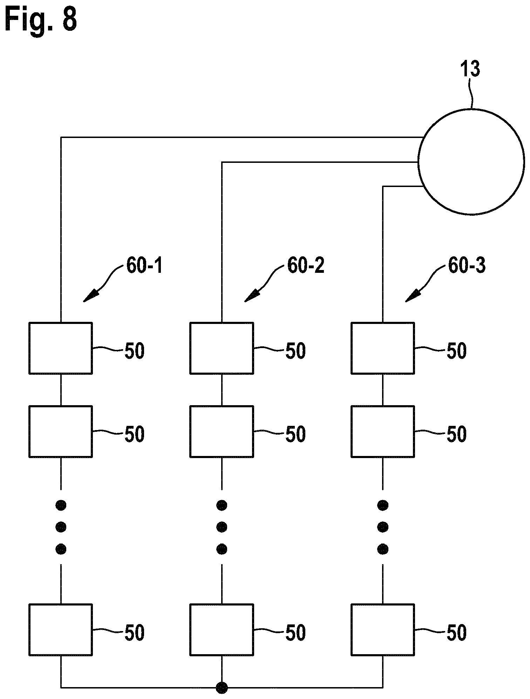

Figur 8 zeigt ein Antriebssystem mit einer weiteren Ausführungsform der erfindungsgemäßen Batterie. Im gezeigten Beispiel besitzt die Batterie drei Batteriemodulstränge 60-1, 60-2 und 60-3, welche jeweils direkt an einen Eingang eines Antriebsmotors 13 angeschlossen sind. Da die meisten verfügbaren Elektromotoren auf einen Betrieb mit drei Phasen ausgelegt sind, besitzt die Batterie der Erfindung bevorzugt genau drei Batteriemodulstränge. Die Batterie der Erfindung besitzt den weiteren Vorzug, dass die Funktionalität eines Pulswechselrichters bereits in die Batterie integriert ist. Indem eine Steuereinheit der Batterie eine variable Anzahl von Batteriemodulen 50 eines Batteriemodulstranges 60 mit wechselnder Polarität aktiviert und die verbleibenden Batteriemodule 50 des Batteriemodulstranges 60 deaktiviert (das heißt eine Ausgangsspannung von 0 V vorgibt), können geeignete (vorzugsweise näherungsweise sinusförmige) Spannungssignale für den Antrieb des Antriebsmotors 13 bereitgestellt werden.

Es wird im Folgenden das Verfahren zur Steuerung der Batterie zum Bereitstellen einer angeforderten Batteriestrang- oder Batterieausgangsspannung beschrieben.

All diesen oben beschriebenen Batterien mit Koppeleinheiten 30 ist folgende Eigenschaft gemeinsam: um eine geforderte Ausgangsspannung, welche kleiner als die maximal zur Verfügung stehende Ausgangsspannung ist, bereitzustellen, sind mehrere verschiedene, aber für das Verhalten an den Klemmen nach außen gleichwertige Schaltkombinationen der in den Systemen beteiligten Halbleiterschalter möglich. Dabei werden nicht mehr alle im System enthaltenen Batteriemodule 50 von dem gleichen Strom durchflossen. Durch diese verschiedenen, gleichwertigen Schaltkombinationen ergeben sich in den Steuerverfahren verschiedene Möglichkeiten zur Optimierung verschiedener Zustände der Batterie.

In Figur 8 ist beispielhaft ein Antriebssystem mit einem Batteriesystem mit integriertem Umrichter mit drei Strängen 60-1, 60-2, 60-3 und mehreren Modulen 50 je Strang gezeigt. In einem ersten Ausführungsbeispiel des Verfahrens wird davon ausgegangen, dass Batteriemodule 50 so ausgebildet sind, dass sie die Spannung 0 V und +U_{mod} ausgeben können. Die Ausgangsspannung an einem Strang 60-1, 60-2 und 60-3 kann dann in Schritten der Modulspannung U_{mod} eingestellt werden. Die maximale Modulausgangsspannung ist ein Vielfaches der Einzelmodulspannung U_{mod}. Somit kann bei vier Batteriemodulen pro Strang 60-1, 60-2, 60-3 die Batteriestrangsspannung U_{Str} zwischen Werten von 0 V und 4xU_{mod} stufig variieren. Dabei kann eine Stufe der Ausgangsspannung mit folgender Anzahl an verschiedenen, gleichwertigen bzw. redundanten Schaltzuständen realisiert werden:

| | |
|---|---|
| U_{Str} = 0: | 1 (alle Koppelmodule aus). |
| U_{Str} = U_{mod}: | 4 (ein Koppelmodul ein, 3 Koppelmodule aus) |
| U_{Str} = 2 U_{mod}: | 6 (2 Koppelmodule ein, 2 Koppelmodule aus). |
| U_{St}, = 3 U_{mod}: | 4 (3 Koppelmodule ein, 1 Koppelmodul aus). |
| U_{Str} = 4 U_{mod}: | 1 (alle Koppelmodul ein). |

Mit anderen Worten hat man für die Bereitstellung der Ausgangsspannung eines Batteriestranges Uₛₜᵣ = U_{mod} vier mögliche Schaltzustände zur Verfügung: Jeweils ist nur ein Batteriemodul 50 der vier Strangbatteriemodule 50 mittels der Koppeleinheit 30 so geschaltet, dass es die Ausgangsspannung U_{mod} ausgibt, während die jeweils drei anderen Strangbatteriemodule 50 mittels ihrer Koppeleinheiten 30 so geschaltet sind, dass sie die Spannung 0 V nach außen führen, also ihre beiden Ausgänge 33, 34 verbunden sind.

Somit stehen außer bei den Ausgangsspannungen 0 V und 4 U_{mod} jeweils mehrere gleichwertige Schaltzustände zur Verfügung, um den Strom Iₛₜᵣ, der aus dem Strang hinaus oder in ihn hinein fließt, durch bestimmte Batteriemodule 50 fließen zu lassen.

Die Potenzialdifferenz zwischen den Anschlüssen des Wechselrichters ergibt sich aus den Ausgangsspannungen der einzelnen Stränge 60-1, 60-2, 60-3. Auch hierbei lassen sich gleiche Potenzialdifferenzen durch unterschiedliche Ausgangsspannungen an den Strängen 60-1, 60-2, 60-3 redundant erzielen. Wenn der Schaltzustand des gesamten Umrichters durch ein Zahlentripel beschrieben wird, wobei die erste Zahl den Schaltzustand des ersten Stranges 60-1, die zweite Zahl den des zweiten Stranges 60-2 und die dritte Zahl den des dritten Stranges 60-3 beschreibt und die Zahlen angeben, das Wievielfache der Modulspannung U_{mod} an den Klemmen des jeweiligen Strangs 60-1, 60-2, 60-3 anliegt, dann sind folgende Zustände in der Potenzialdifferenz identisch: 100, 211, 322 und 433. Über die Auswahl eines der gleichwertigen Schaltzustände des Umrichters kann wiederum der Stromfluss in diesem Zweig auf bestimmte Module verteilt werden.

Je nachdem, welche der Zustände der Batteriemodule 50 beeinflusst werden sollen, ergibt sich eine Auswahlvorschrift, nach der die einzelnen Batteriemodule an der Stromführung beteiligt werden. Im Folgenden soll zunächst eine Beeinflussung des Ladezustandes beschrieben werden. Die Auswahl der Batteriemodule 50 hängt von der Richtung des Stromflusses im Strang 60-1, 60-2, 60-3 und vom Ladezustand SOC ab. Der Ladezustand SOC eines Moduls 50 kann entweder direkt aus seiner Spannung abgeleitet werden oder es können bekannte Verfahren zur Bestimmung des SOC herangezogen werden. Die Stromrichtung ist der Regelung des Umrichters dabei bekannt. Ist die Stromrichtung so, dass für den Strom im Strang I_{Str} > 0 gilt, werden die Module 50 an der Stromführung beteiligt, die momentan den höchsten Ladezustand haben. Ist die Stromrichtung so, dass für den Strom im Strang I_{Str} < 0 gilt, werden die Module 50 an der Stromführung beteiligt, die den momentan kleinsten Ladezustand haben.

Beispielsweise werden die Batteriemodule 50 sequentiell ausgewählt. Es wird dann zunächst das Batteriemodul 50 mit dem niedrigsten Ladezustand SOC ausgewählt, dann das Batteriemodul 50 mit dem zweitniedrigsten Ladezustand SOC usw. Es können aber auch Ladezustandsbereiche vorbestimmt und diesen Ladezustandsbereichen bestimmte Auswahlwahrscheinlichkeiten zugewiesen werden. Insbesondere kann einem hohen Ladezustandsbereich eine höhere Wahrscheinlichkeit zur Auswahl als einem niedrigen Ladezustandsbereich zugewiesen werden, und vice versa, je nach gewünschter Stromrichtung. Dann werden die Batterien mit einem hohen Ladezustand häufiger an der Stromführung beteiligt als die mit einem niedrigen Ladezustand und eine Reihenfolge der Batteriemodule nach dem Ladezustand muss nicht bestimmt werden. In jedem Fall wird durch diese Steuerung verhindert, dass sich der Ladezustand der verschiedenen Batteriemodule 50 stark unterscheidet.

Eine solche Steuerung nach Reihenfolge je nach Wert einer bestimmten Batteriekenngröße oder nach Auswahlwahrscheinlichkeiten für Bereiche von Batteriekenngrößenwerten ist dabei den folgenden verschiedenen Batteriekenngrößen gemein und wird im Folgenden nicht für jede Kenngröße explizit neu beschrieben werden.

Auch kann die Temperatur der Batteriemodule 50 und somit der Gesamtbatterie beeinflusst werden. Die Temperatur der Batteriezellen wird aus Sicherheitsgründen gemessen und ist daher bekannt Die Stromrichtung ist für die Temperaturentwicklung nicht von Bedeutung. Bevorzugt werden gemäß der Erfindung die Module 50 am häufigsten an der Stromführung beteiligt, die die kleinste Temperatur haben. Es werden die Module am seltensten an der Stromführung beteiligt, die die höchste Temperatur haben.

Zur Beeinflussung der Alterung können, wenn aus bekannten Verfahren ein State-of-Health SOH für die Batteriemodule 50 bestimmt wird, in Abhängigkeit von diesem die Module 50 an der Stromführung beteiligt werden. Bevorzugt werden die Module 50 mit dem höchsten SOH am häufigsten an der Stromführung beteiligt. Die Module 50 mit dem niedrigsten SOH werden am seltensten an der Stromführung beteiligt. Ist kein SOH für die Module 50 bekannt, so kann die Verteilung der Stromführungsdauern gleichmäßig über die Module erfolgen, so dass eine gleichmäßige Alterung erfolgt.

Auch die Lebensdauer der Batteriemodule kann durch das erfindungsgemäße Verfahren beeinflusst werden. Dabei wird die Lebensdauer von Batteriezellen durch die Lade- und Entladezyklen bestimmt. Um möglichst wenige Zyklen für ein Modul zu bekommen, werden stets solche Schaltzustände ausgewählt, bei denen der gewünschte Zustand mit einer minimalen Anzahl an der Stromführung beteiligten Module erreicht wird.

Die Zustände der Batteriemodule können jeweils einzeln beeinflusst werden. Es können aber auch mehrere oder alle Zustände gleichzeitig beeinflusst werden. Dabei werden die Regeln für die jeweiligen Batteriekenngrößen gemeinsam ausgewertet. Ergeben sich aus den verschiedene Regeln sich widersprechende Forderungen für die Auswahl der Module 50, so kann dies über eine Priorisierung der einzelnen Kenngrößen gelöst werden. Eine andere Möglichkeit der Konfliktlösung ist, jedem Zustand einen gewissen Zeitraum zur Verfügung zu stellen, in dem die Module 50 nach der zugehörigen Regel ausgewählt werden und dann iterativ die einzelnen Kenngrößen beeinflussen.

In einem weiteren Ausführungsbeispiel der Erfindung werden nun Batteriemodule 50 der Figur 5 eingesetzt, die also drei Spannungswerte ausgeben können: ⁺U_{mod}, 0 V und -U_{mod}. Somit kann die Ausgangsspannung an den Strängen 60-1, 60-2 und 60-3 in Schritten der Modulspannung U_{mod} von U_{Str}, = -4xU_{mod} bis 4xU_{mod} eingestellt werden. Dabei kann eine Stufe der Ausgangsspannung mit folgender Anzahl an verschiedenen Schaltzuständen realisiert werden.

| | | | |
|---|---|---|---|
| U_{Str}, = -4 U_{mod} | 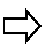 | 1 | (alle Batteriemodule geben -U_{mod} aus) |
| U_{Str}, = -3 U_{mod} | 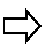 | 4 | (drei Module -U_{mod}, ein Modul 0V) |
| U_{Str}, = -2 U_{mod} | 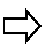 | 10 | |
| U_{Str}, = -U_{mod} | 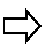 | 16 | |
| U_{Str}, = 0V | 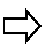 | 19 | |
| U_{Str}, = U_{mod} | 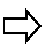 | 16 | |
| U_{Str}, = 2 U_{mod} | 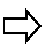 | 10 | |
| U_{Str}, = 3 U_{mod} | 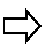 | 4 | (drei Module +U_{mod}, ein Modul 0V) |
| U_{Str}, = 4 U_{mod} | 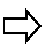 | 1 | (alle Batteriemodule geben +U_{mod} aus) |

So ergeben sich zum Beispiel für die angeforderte Batteriestrangausgangsspannung von 2xU_{mod} mit den Einzelmodulspannungen von +U_{mod} (+), -U_{mod} (-) und 0V (0) zehn mögliche Kombinationen:

| Modul | 1 | 2 | 3 | 4 | 5 | 6 | 7 | 8 | 9 | 10 |
|---|---|---|---|---|---|---|---|---|---|---|
| 1 | + | + | 0 | + | 0 | 0 | + | + | + | - |
| 2 | + | 0 | + | 0 | + | 0 | + | + | - | + |
| 3 | 0 | + | + | 0 | 0 | + | + | - | + | + |
| 4 | 0 | 0 | 0 | + | + | + | - | + | + | + |

Somit stehen außer bei den Ausgangsspannungen -4 U_{mod} und 4 U_{mod} jeweils mehrere gleichwertige, redundante Schaltzustände zur Verfügung, um den Strom I, der aus dem Strang 60-1, 60-2 60-3 hinaus oder in ihn hinein fließt, durch bestimmte Module 50 fließen zu lassen.

Die Potenzialdifferenz zwischen den Anschlüssen des Wechselrichters kann auch hier durch unterschiedliche Ausgangsspannungen an den Strängen 60-1, 60-2, 60-3 erzielt werden. Wenn der Schaltzustand des gesamten Umrichters durch ein Zahlentripel beschrieben wird, wobei die erste Zahl den Schaltzustand des ersten Stranges 60-1, die zweite Zahl den des zweiten Stranges 60-2 und die dritte Zahl den des dritten Stranges 60-3 beschreibt und die Zahlen angeben, das Wievielfache der Modulspannung Umod an den Klemmen des jeweiligen Stranges 60-1, 60-2, 60-3 anliegt, dann sind folgende Zustände in der Potenzialdifferenz identisch: 344 und 233 und 122 und 011 sowie -100 und -2-1-1 und -3-2-2 und -4-3-3. Über die Auswahl eines der gleichwertigen Schaltzustände des Umrichters kann wiederum der Stromfluss in diesem Zweig auf bestimmte Module verteilt werden.

Für die Beeinflussung der Zustände der Batterie gelten dieselben Regeln wie im ersten Ausführungsbeispiel beschrieben. Lediglich für die Beeinflussung des Ladezustandes wird die Regel abgeändert.

Die Auswahl der Module 50 hängt von der Richtung des Stromflusses im Strang 60-1, 60-2, 60-3 ab, vom Ladezustand SOC und der Modulausgangsspannung - U_{mod} und +U_{mod} ab. Die Stromrichtung und die geforderte Modulausgangsspannung sind der Regelung des Umrichters bekannt.
Gilt nun:
Iₛₜᵣ > 0 und U_{Str}, > 0, werden die Module 50 an der Stromführung beteiligt, die momentan den höchsten Ladezustand haben, also mit abfallendem Ladezustand;
Iₛₜᵣ, < 0 und U_{Str}, > 0, werden die Module 50 an der Stromführung beteiligt, die momentan den kleinsten Ladezustand haben, also mit ansteigendem Ladezustand;
Iₛₜᵣ < 0 und U_{Str} < 0, werden die Module 50 an der Stromführung beteiligt, die momentan den höchsten Ladezustand haben, also mit abfallendem Ladezustand;
Iₛₜᵣ > 0 und U_{Str} < 0, werden die Module 50 an der Stromführung beteiligt, die momentan den kleinsten Ladezustand haben, also mit ansteigendem Ladezustand.

Es wird dabei lediglich bevorzugt und nicht beschränkend mit dem jeweils kleinsten oder größten Ladezustand begonnen. Wie im ersten Ausführungsbeispiel angeführt, können auch Ladezustandsbereiche definiert werden und diesen Bereichen eine gewisse Auswahlwahrscheinlichkeit zugewiesen werden. Dann muss nicht jedes Mal die Reihenfolge der Batteriemodule 50 nach Ladezustand bestimmt werden.

Alle anderen Batteriekenngrößen können wie im ersten Ausführungsbeispiel ausgewählt werden.

## Patentansprüche

1. Verfahren zur Steuerung einer Batterie umfassend mindestens einen Batteriemodulstrang (60) bestehend aus einer Mehrzahl von miteinander gekoppelten Batteriemodulen (50), wobei ein Batteriemodul (50) eine Koppeleinheit (30) aufweist, die so ausgebildet ist, dass eine positive Batteriemodulspannung (U_{mod}) und eine Spannung von 0 V vom Batteriemodul (50) wahlweise ausgebbar sind, wobei das Verfahren folgende Schritte umfasst:
- Anfordern einer bereitzustellenden Batterie- oder Batteriestrangausgangsspannung (S1);
- Bestimmen einer Anzahl von Batteriemodulen (50), die zur Bereitstellung der angeforderten Ausgangsspannung benötigt werden (S2);
- Auswahl von Batteriemodulen (50) bis die benötigte Anzahl von Batteriemodulen (50) erreicht ist in Abhängigkeit mindestens einer der folgenden Batteriekenngrößen (S3):
- dem Ladezustand (S3.1), wobei Batteriemodule (50) mit hohem Ladezustand (SOC) mit einer höheren Wahrscheinlichkeit als Batteriemodule (50) mit niedrigem Ladezustand (SOC) ausgewählt werden, wenn der Strom aus der Batterie oder dem Batteriestrang einen Wert von größer Null aufweist oder Batteriemodule (50) mit niedrigem Ladezustand (SOC) mit einer höheren Wahrscheinlichkeit als Batteriemodule (50) mit hohem Ladezustand (SOC) ausgewählt werden, wenn der Strom aus der Batterie oder dem Batteriestrang einen Wert von kleiner Null aufweist,
- der Temperatur (S3.2), wobei Batteriemodule (50) mit einer kleinen Temperatur mit einer höheren Wahrscheinlichkeit als Batteriemodule (50) mit einer großen Temperatur ausgewählt werden,
- der Alterung (S3.3), wobei Batteriemodule (50) mit hohem State of-Health (SOH) mit höherer Wahrscheinlichkeit als Batteriemodule (50) mit niedrigerem State-of-Health (SOH) ausgewählt werden,
- der Lebensdauer (S3.4);
- Bereitstellen der angeforderten Batterie- oder Batteriestrangausgangsspannung (S4);
wobei eine Koppeleinheit (30) einen ersten Eingang (31), einen zweiten Eingang (32), einen ersten Ausgang (33) und einen zweiten Ausgang (34) sowie einen ersten, einen zweiten, einen dritten und einen vierten Schalter (35, 36, 37, 38) umfasst, wobei der erste Schalter (35) zwischen den ersten Eingang (31) und den ersten Ausgang (33) geschaltet ist, der zweite Schalter (36) zwischen den zweiten Eingang (32) und den zweiten Ausgang (34), der dritte Schalter (37) zwischen den ersten Eingang (31) und den zweiten Ausgang (34) und der vierte Schalter (38) zwischen den zweiten Eingang (32) und den ersten Ausgang (33) geschaltet ist, wobei die Koppeleinheit (30) ausgebildet ist, in einem ersten Schaltzustand auf ein erstes Steuersignal hin den ersten Eingang (31) mit dem ersten Ausgang (33) über den ersten Schalter (35) und den zweiten Eingang (32) mit dem zweiten Ausgang (34) über den dritten Schalter (37) oder den ersten Eingang (31) mit dem zweiten Ausgang (34) über den dritten Schalter (37) und den zweiten Eingang (32) mit dem ersten Ausgang (33) über den vierten Schalter (38) zu verbinden und in einem zweiten Schaltzustand auf ein zweites Steuersignal hin den ersten Ausgang (33) mit dem zweiten Ausgang (34) zu verbinden.

2. Verfahren nach Anspruch 1, wobei im Schritt (S3) der Auswahl von Batteriemodulen (50) die benötigten Batteriemodule (50) zeitlich sequentiell ausgewählt werden.

3. Verfahren nach Anspruch 2, wobei der Schritt (S2) des Bestimmens der Anzahl von Batteriemodulen (50) den Schritt des Bestimmens von Kombinationen von Schaltzuständen der Koppeleinheiten (30) der Batteriemodule (50) umfasst, mit denen die angeforderte Batterieausgangsspannung erreichbar ist, und der Schritt (S3) der Auswahl von Batteriemodulen (50) den Schritt der Auswahl einer Kombination aus den zuvor bestimmten Kombinationen von Schaltzuständen der Koppeleinheiten (30) von Batteriemodulen (50) in Abhängigkeit mindestens einer der besagten Batteriekenngrößen erfolgt.

4. Verfahren nach einem der vorhergehenden Ansprüche, wobei im Schritt (S3) der Auswahl der Batteriemodule (50) die Anzahl der ausgewählten Batteriemodule (50) minimal ist.

5. Verfahren nach einem der vorhergehenden Ansprüche, wobei ein Batteriemodul (50) eine Koppeleinheit (30) aufweist, die so ausgebildet ist, dass eine positive Batteriemodulspannung (+U_{mod}), eine negative Batteriemodulausgangsspannung (-U_{mod}) und eine Spannung von 0 V vom Batteriemodul (50) ausgebbar ist, und der Schritt (S3) der Auswahl der Batteriemodule (50) ferner umfasst:
- wenn der Strom aus der Batterie oder dem mindestens einen Batteriemodulstrang (60) einen Wert von größer Null zur Erlangung einer positiven Batterie- oder Strangausgangsspannung (Uₛₜᵣ) aufweist, Auswahl der Batteriemodule (50) mit hohem Ladezustand (SOC) mit einer höheren Wahrscheinlichkeit als Batteriemodule (50) mit niedrigem Ladezustand,
- wenn der Strom aus der Batterie oder dem mindestens einen Batteriemodulstrang (60) einen Wert von kleiner Null zur Erlangung einer positiven Batterie- oder Strangausgangsspannung (Uₛₜᵣ) aufweist, Auswahl der Batteriemodule (50) mit niedrigem Ladezustand (SOC) mit einer höheren Wahrscheinlichkeit als Batteriemodule (50) mit hohem Ladezustand (SOC),
- wenn der Strom aus der Batterie oder dem mindestens einen Batteriemodulstrang (60) einen Wert kleiner Null zur Erlangung einer negativen Batterie- oder Strangausgangsspannung (Uₛₜᵣ) aufweist, Auswahl der Batteriemodule (50) mit hohem Ladezustand (SOC) mit einer höheren Wahrscheinlichkeit als Batteriemodule (50) mit niedrigem Ladezustand, und
- wenn der Strom aus der Batterie oder dem mindestens einen Batteriemodulstrang (60) einen Wert größer Null zur Erlangung einer negativen Batterie- oder Strangausgangsspannung (Uₛₜᵣ) aufweist, Auswahl der Batteriemodule (50) mit niedrigem Ladezustand (SOC) mit einer höheren Wahrscheinlichkeit als Batteriemodule (50) mit hohem Ladezustand.

6. Verfahren nach Anspruch 1, wobei die Batterie eine Mehrzahl von Batteriemodulsträngen (60) umfasst und die Differenz der Batteriemodulstränge (60) zwischen zwei Strängen die angeforderte Batterieausgangsspannung definiert und die Auswahl der Differenz zwischen den Batteriemodulsträngen (60) in Abhängigkeit von mindestens einer der besagten Batteriekenngrößen erfolgt.

7. Batterie umfassend mindestens einen Batteriemodulstrang (60) bestehend aus einer Mehrzahl von miteinander gekoppelten Batteriemodulen (50), wobei jedes Batteriemodul (50) eine Koppeleinheit (30) aufweist, und jede Koppeleinheit (30) so ausgebildet ist, dass eine positive Batteriemodulausgangsspannung (+U_{mod}), eine negative Batteriemodulausgangsspannung (-U_{mod}) und eine Spannung von 0 V, oder eine positive Batteriemodulspannung (+U_{mod}) und eine Spannung von 0 V vom Batteriemodul (50) ausgebbar ist, wobei die Batterie dazu ausgebildet ist, das Verfahren nach einem der Ansprüche 1 bis 6 auszuführen.

8. Ein Kraftfahrzeug mit einem elektrischen Antriebsmotor (13) zum Antreiben des Kraftfahrzeuges und einer mit dem elektrischen Antriebsmotor (13) verbundenen Batterie gemäß Anspruch 7.

## Claims

1. Method for controlling a battery comprising at least one battery module string (60) consisting of a plurality of battery modules (50) coupled to one another, a battery module (50) having a coupling unit (30) which is designed in such a manner that a positive battery module voltage (U_{mod}) and a voltage of 0 V can be selectively output by the battery module (50), the method comprising the following steps of:
- requesting a battery or battery string output voltage to be provided (S1);
- determining a number of battery modules (50) needed to provide the requested output voltage (S2) ;
- selecting battery modules (50) until the required number of battery modules (50) has been reached on the basis of at least one of the following battery characteristic variables (S3):
- the state of charge (S3.1), in which case battery modules (50) with a high state of charge (SOC) are more likely to be selected than battery modules (50) with a low state of charge (SOC) if the current from the battery or the battery string has a value of greater than zero, or battery modules (50) with a low state of charge (SOC) are more likely to be selected than battery modules (50) with a high state of charge (SOC) if the current from the battery or the battery string has a value of less than zero,
- the temperature (S3.2), in which case battery modules (50) with a low temperature are more likely to be selected than battery modules (50) with a high temperature,
- the ageing (S3.3), in which case battery modules (50) with a high state of health (SOH) are more likely to be selected than battery modules (50) with a lower state of health (SOH),
- the service life (S3.4);
- providing the requested battery or battery string output voltage (S4);
a coupling unit (30) comprising a first input (31), a second input (32), a first output (33) and a second output (34) and a first, a second, a third and a fourth switch (35, 36, 37, 38), the first switch (35) being connected between the first input (31) and the first output (33), the second switch (36) being connected between the second input (32) and the second output (34), the third switch (37) being connected between the first input (31) and the second output (34), and the fourth switch (38) being connected between the second input (32) and the first output (33), the coupling unit (30) being designed to connect the first input (31) to the first output (33) via the first switch (35) and to connect the second input (32) to the second output (34) via the third switch (37) or to connect the first input (31) to the second output (34) via the third switch (37) and to connect the second input (32) to the first output (33) via the fourth switch (38) in a first switching state in response to a first control signal and to connect the first output (33) to the second output (34) in a second switching state in response to a second control signal.

2. Method according to Claim 1, the required battery modules (50) being selected in a temporally sequential manner in the step (S3) of selecting battery modules (50).

3. Method according to Claim 2, the step (S2) of determining the number of battery modules (50) comprising the step of determining combinations of switching states of the coupling units (30) of the battery modules (50) which can be used to achieve the requested battery output voltage, and the step (S3) of selecting battery modules (50) comprising the step of selecting a combination of the previously determined combinations of switching states of the coupling units (30) of battery modules (50) on the basis of at least one of said battery characteristic variables.

4. Method according to one of the preceding claims, the number of selected battery modules (50) being minimal in the step (S3) of selecting the battery modules (50).

5. Method according to one of the preceding claims, a battery module (50) having a coupling unit (30) which is designed in such a manner that a positive battery module voltage (+U_{mod}), a negative battery module output voltage (-U_{mod}) and a voltage of 0 V can be output by the battery module (50), and the step (S3) of selecting the battery modules (50) also comprising:
- more likely selecting the battery modules (50) with a high state of charge (SOC) than battery modules (50) with a low state of charge if the current from the battery or the at least one battery module string (60) has a value of greater than zero, in order to obtain a positive battery or string output voltage (Uₛₜᵣ),
- more likely selecting the battery modules (50) with a low state of charge (SOC) than battery modules (50) with a high state of charge (SOC) if the current from the battery or the at least one battery module string (60) has a value of less than zero, in order to obtain a positive battery or string output voltage (Uₛₜᵣ),
- more likely selecting the battery modules (50) with a high state of charge (SOC) than battery modules (50) with a low state of charge if the current from the battery or the at least one battery module string (60) has a value of less than zero, in order to obtain a negative battery or string output voltage (Uₛₜᵣ), and
- more likely selecting the battery modules (50) with a low state of charge (SOC) than battery modules (50) with a high state of charge if the current from the battery or the at least one battery module string (60) has a value of greater than zero, in order to obtain a negative battery or string output voltage (Uₛₜᵣ).

6. Method according to Claim 1, the battery comprising a plurality of battery module strings (60) and the difference in the battery module strings (60) between two strings defining the requested battery output voltage, and the difference between the battery module strings (60) being selected on the basis of at least one of said battery characteristic variables.

7. Battery comprising at least one battery module string (60) consisting of a plurality of battery modules (50) coupled to one another, each battery module (50) having a coupling unit (30), and each coupling unit (30) being designed in such a manner that a positive battery module output voltage (+U_{mod}), a negative battery module output voltage (-U_{mod}) and a voltage of 0 V or a positive battery module voltage (+U_{mod}) and a voltage of 0 V can be output by the battery module (50), the battery being designed to carry out the method according to one of Claims 1 to 6.

8. Motor vehicle having an electrical drive motor (13) for driving the motor vehicle and a battery according to Claim 7 connected to the electrical drive motor (13).

## Revendications

1. Procédé de commande d'une batterie comprenant au moins une branche de modules de batterie (60) composée d'une pluralité de modules de batterie (50) couplés les uns aux autres, un module de batterie (50) possédant une unité de couplage (30) qui est configurée de telle sorte qu'une tension de module de batterie (U_{mod}) positive et une tension de 0 V peuvent être délivrées au choix par le module de batterie (50), le procédé comprenant les étapes suivantes :
- demande d'une tension de sortie de batterie ou de branche de batteries (S1) ;
- détermination d'un nombre de modules de batterie (50) qui sont nécessaires pour délivrer la tension de sortie demandée (S2) ;
- sélection de modules de batterie (50) jusqu'à atteindre le nombre nécessaire de modules de batterie (50) en fonction d'au moins l'une des grandeurs caractéristiques de batterie suivantes (S3) :
- l'état de charge (S3.1), les modules de batterie (50) dont l'état de charge (SOC) est élevé étant sélectionnés avec une plus grande probabilité que les modules de batterie (50) dont l'état de charge (SOC) est faible lorsque le courant provenant de la batterie ou de la branche de batteries présente une valeur supérieure à zéro, ou les modules de batterie (50) dont l'état de charge (SOC) est faible étant sélectionnés avec une plus grande probabilité que les modules de batterie (50) dont l'état de charge (SOC) est élevé lorsque le courant provenant de la batterie ou de la branche de batteries présente une valeur inférieure à zéro,
- la température (S3.2), les modules de batterie (50) dont la température est basse étant sélectionnés avec une plus grande probabilité que les modules de batterie (50) dont la température est élevée,
- le vieillissement (S3.3), les modules de batterie (50) dont l'état de santé (SOH) est plus élevé étant sélectionnés avec une plus grande probabilité que les modules de batterie (50) dont l'état de santé (SOH) est plus faible,
- la durée de vie (S3.4) ;
- délivrance de la tension de sortie de batterie ou de branche de batteries demandée (S4) ;
une unité de couplage (30) comprenant une première entrée (31), une deuxième entrée (32), une première sortie (33) et une deuxième sortie (34) ainsi qu'un premier, un deuxième, un troisième et un quatrième commutateurs (35, 36, 37, 38), le premier commutateur (35) étant branché entre la première entrée (31) et la première sortie (33), le deuxième commutateur (36) entre la deuxième entrée (32) et la deuxième sortie (34), le troisième commutateur (37) entre la première entrée (31) et la deuxième sortie (34) et le quatrième commutateur (38) entre la deuxième entrée (32) et la première sortie (33), l'unité de couplage (30) étant configurée pour, dans un premier état de commutation résultant d'un premier signal de commande, relier la première entrée (31) à la première sortie (33) par le biais du premier commutateur (35) et la deuxième entrée (32) à la deuxième sortie (34) par le biais du troisième commutateur (37) ou la première entrée (31) à la deuxième sortie (34) par le biais du troisième commutateur (37) et la deuxième entrée (32) à la première sortie (33) par le biais du quatrième commutateur (38) et, dans un deuxième état de commutation résultant d'un deuxième signal de commande, relier la première sortie (33) à la deuxième sortie (34) .

2. Procédé selon la revendication 1, selon lequel, à l'étape (S3) de sélection des modules de batterie (50), les modules de batterie (50) nécessaires étant sélectionnés séquentiellement dans le temps.

3. Procédé selon la revendication 2, l'étape (S2) de détermination d'un nombre de modules de batterie (50) comprenant l'étape de détermination des combinaisons d'états de commutation des unités de couplage (30) des modules de batterie (50) avec lesquelles la tension de sortie de branche de batteries demandée peut être atteinte, et l'étape (S3) de sélection des modules de batterie (50) comprenant l'étape de sélection d'une combinaison parmi les combinaisons déterminées précédemment d'états de commutation des unités de couplage (30) des modules de batterie (50) en fonction d'au moins l'une desdites grandeurs caractéristiques de batterie.

4. Procédé selon l'une des revendications précédentes, le nombre de modules de batterie (50) sélectionnés à l'étape (S3) de sélection des modules de batterie (50) étant minimal.

5. Procédé selon l'une des revendications précédentes, un module de batterie (50) possédant une unité de couplage (30) qui est configurée de telle sorte qu'une tension de module de batterie positive (+U_{mod}), une tension de module de batterie négative (-U_{mod}) et une tension de 0 V peuvent être délivrées par le module de batterie (50), et l'étape (S3) de sélection des modules de batterie (50) comprenant en outre :
- lorsque le courant provenant de la batterie ou de l'au moins une branche de modules de batterie (60) présente une valeur supérieure à zéro pour parvenir à une tension de sortie de batterie ou de branche de batterie (Uₛₜᵣ) positive, sélection des modules de batterie (50) dont l'état de charge (SOC) est élevé avec une plus grande probabilité que les modules de batterie (50) dont l'état de charge (SOC) est faible,
- lorsque le courant provenant de la batterie ou de l'au moins une branche de modules de batterie (60) présente une valeur inférieure à zéro pour parvenir à une tension de sortie de batterie ou de branche de batterie (Uₛₜᵣ) positive, sélection des modules de batterie (50) dont l'état de charge (SOC) est faible avec une plus grande probabilité que les modules de batterie (50) dont l'état de charge (SOC) est élevé,
- lorsque le courant provenant de la batterie ou de l'au moins une branche de modules de batterie (60) présente une valeur inférieure à zéro pour parvenir à une tension de sortie de batterie ou de branche de batterie (Uₛₜᵣ) négative, sélection des modules de batterie (50) dont l'état de charge (SOC) est élevé avec une plus grande probabilité que les modules de batterie (50) dont l'état de charge (SOC) est faible et
- lorsque le courant provenant de la batterie ou de l'au moins une branche de modules de batterie (60) présente une valeur supérieure à zéro pour parvenir à une tension de sortie de batterie ou de branche de batterie (Uₛₜᵣ) négative, sélection des modules de batterie (50) dont l'état de charge (SOC) est faible avec une plus grande probabilité que les modules de batterie (50) dont l'état de charge (SOC) est élevé.

6. Procédé selon la revendication 1, la batterie comprenant une pluralité de branches de modules de batterie (60) et la différence des branches de modules de batterie (60) entre deux branches définissant la tension de sortie de branche de batterie demandée et la sélection de la différence entre les branches de modules de batterie (60) s'effectuant en fonction d'au moins l'une desdites grandeurs caractéristiques de batterie.

7. Batterie comprenant au moins une branche de modules de batterie (60) composée d'une pluralité de modules de batterie (50) couplés les uns aux autres, chaque module de batterie (50) possédant une unité de couplage (30) et chaque unité de couplage (30) étant configurée de telle sorte qu'une tension de module de batterie positive (+U_{mod}), une tension de module de batterie négative (-U_{mod}) et une tension de 0 V, ou une tension de module de batterie positive (+U_{mod}) et une tension de 0 V peuvent être délivrées par le module de batterie (50), la batterie étant configurée pour mettre en oeuvre un procédé selon l'une des revendications 1 à 6.

8. Véhicule automobile équipé d'un moteur de propulsion électrique (13) servant à la propulsion et d'une batterie selon la revendication 7, relié au moteur de propulsion électrique (13).
